# Europäisches Patentamt
# European Patent Office
# Office européen des brevets

(19)

(11) Numéro de publication: **0 171 306**
**B1**

(12)
# FASCICULE DE BREVET EUROPÉEN

(45) Date de publication du fascicule du brevet:
**31.05.89**

(51) Int. Cl.⁴: **G 01 P 7/00,** B 64 D 43/02

(21) Numéro de dépôt: **85401302.6**

(22) Date de dépôt: **27.06.85**

(54) **Dispositif pour mesurer la vitesse d'un hélicoptère.**

(30) Priorité: **06.07.84 FR 8410736**

(43) Date de publication de la demande:
**12.02.86 Bulletin 86/7**

(45) Mention de la délivrance du brevet:
**31.05.89 Bulletin 89/22**

(84) Etats contractants désignés:
**DE GB IT**

(56) Documents cité:
**FR-A-2 282 644**
**GB-A-596 666**

(73) Titulaire: **Durand, Bernard, Chemin VIDAL Route d'Arles, F-13300 Salon de Provence (FR)**

(72) Inventeur: **Durand, Bernard, Chemin VIDAL Route d'Arles, F-13300 Salon de Provence (FR)**

(74) Mandataire: **Célanie, Christian, Bureau des brevets et inventions de la Délégation générale pour l'armement 26, Boulevard Victor, F-75996 Paris Armées (FR)**

EP 0 171 306 B1

LIBER. STOCKHOLM 1989

## Description

L'invention présente conrerne un dispositif pour mesurer la vitesse d'un hélicoptère par rapport à l'air, notamment au voisinage du vol stationnaire.

Les appareils connus présentent certains inconvénients au voisinage du vol stationnaire car les sondes habituellement utilisées sont peu précises aux faibles pressions dynamiques correspondant aux basses vitesses à mesurer.

De plus, ces sondes ne permettent pas de mesurer facilement une vitesse d'orientation quelconque notamment vers l'arrière ou latéralement, ce qui est un des principaux avantages de l'hélicoptère.

Outre les sondes de pression dynamique, on a également proposé dans le brevet FR-1 567 128 d'installer dans la veine d'écoulement du rotor un système à deux girouettes orientées respectivement suivant l'axe longitudinal et l'axe transversal de l'hélicoptère.

Ce dispositif, efficace, présente néanmoins des limitations de par sa disposition extérieure et sa fragilité relative qui impose un entretien fréquent trop onéreux pour un hélicoptère de série.

On a proposé également dans le brevet FR-2 282 644 un dispositif comprenant deux chaînes de mesures (l'une pour la composante longitudinale et l'autre pour la composante transversale de la vitesse), dont chaque chaîne de mesure comporte un premier détecteur de position de la commande cyclique du pas du rotor suivant l'axe considéré et un second détecteur de la composante de l'accélération suivant le même axe ainsi que les moyens de mesure associés pour assurer l'intégration de la somme algébrique des valeurs mesurées par les deux détecteurs correspondants.

Ce dispositif fonctionne très bien avec une précision remarquable mais reste néanmoins d'une conception relativement couteuse qui en exclut l'utilisation pour des hélicoptères de faible prix ou de très grande série.

La présente invention vise à remédier à cet inconvénient en proposant un dispositif proche du précédent, dont il constitue un perfectionnement, disposant d'une technique plus simple à mettre en oeuvre et plus facile à régler sans qu'il en résulte la moindre dégradation des performance, dans la zone des basses vitesses et permettant l'extension du fonctionnement à tout le domaine de vol de l'hélicoptère.

L'invention concerne un dispositif pour mesurer, notamment au voisinage du régime de vol stationnaire, la vitesse par rapport à l'air d'un hélicoptère comportant au moins un rotor de sustentation et un système de commande cyclique du pas du rotor manoeuvré au moyen d'un manche de pilotage, le dispositif comportant deux chaînes de mesure sensiblement identiques associées à un indicateur double et correspondant respectivement au déplacement de l'hélicoptère suivant son axe longitudinal et suivant son axe transversal et comportant en combinaison des moyens de calcul qui se distingue de l'état de la technique connu notamment en ce que chaque chaîne de mesure comprend un détecteur unique de la position de commande cyclique du pas du rotor suivant l'axe considéré et de la composante de l'accélération suivant le même axe et en ce que les moyens de calcul assurent l'intégration du signal de sortie du détecteur unique de chaque chaîne de mesure pour fournir les composantes de la vitesse par rapport à l'air de l'hélicoptère par rapport aux axes considérés, à tous types de dispositifs notamment des indicateurs de pilotage à lecture directe, un pilote automatique, un système de navigation ou un calculateur de tir.

Plus précisément, pour un hélicoptère dont le rotor comporte un système de commande de variation cyclique de pas commandé par au moins une bielle de commande longitudinale sensiblement située dans un plan passant par l'axe Z1 - Z2 du rotor et l'axe longitudinal X1 - X2 de fuselage et une bielle de commande transversale sensiblement située dans un plan perpendiculaire au précèdent et défini par l'axe Z1 - Z2 du rotor et l'axe transversal Y1 - Y2 du fuselage, les deux bielles étant sensiblement parallèles à l'axe Z1 - Z2 du rotor, l'invention coniste en ce que le détecteur unique de la position de commande cyclique du pas du rotor suivant l'axe considéré et de la composante de l'accélération suivant le même axe est consitue pour chaque chaîne par un accéléromètre disposé respectivement pour agir dans le plan vertical longitudinal passant par les axes X1 - X2 et Z1 - Z2 pour la chaîne de mesure de la composante longitudinale et dans le plan vertical transversal Y1 - Y2 et passant par les axes Z1 - Z2 pour la chaîne de mesure de la composante transversale, chaque accéléromètre étant disposé sur une plate-forme liée au déplacement vertical de la bielle considérée, le signal de sortie de chaque accéléromètre étant transmis aux moyens de calcul par l'intermédiaire de liaison par fils.

Dans un mode de réalisation, les plates-formes sont calées de telle sorte que leurs mouvements s'effectuent de part et d'autre de plans sensiblement parallèles au plan de référence passant par les axes X1 - X2 et Z1 - Z2 par rotation autour d' un axe parallèle à l'un des axes principaux de l'hélicoptère (respectivement Y1 - Y2, X1 - X2), tandis que dans un autre mode de réalisation, les plates-formes sont calées de telle sorte que leurs mouvements s'effectuent de part et d'autre d'un plan incliné par rapport au plan de référence par rotation autour d'un axe parallèle à l'un des axes principaux de l'hélicoptère (respectivement Y1 - Y2, X1 - X2) pour compenser des effets secondaires tels que la distorsion du flux du rotor ou des particularités de construction de l'hélicoptère.

Dans un mode préféré de réalisation de l'invention, les plates-formes sont constituées d'un plateau dont une extrémité est liée à la bielle de commande de pas cyclique correspondante, au moyen d'une articulation sans jeu et dont l'autre extrémité repose sur la cellule de l'hélicoptère au moyen d'une biellette de longueur ajustable par exemple constituée par une double tige filetée à pas inversés, commandée par un double écrou freinable à pas inversés.

D'autres particularités de l'invention, ainsi qu'un mode de réalisation des moyens de calcul coopérant avec chacune des chaînes de mesure, seront décrits dans le complément de description qui va suivre, accompagné des planches de dessins parmi lesquelles:

- la figure 1 est une coupe longitudinale représentée schématiquement d'un hélicoptère équipé d'un dispositif de mesure selon l'invention;
- la figure 2 est une coupe transversale suivant II - II de la figure 1;
- la figure 3 représente schématiquement en perspective l'installation du dispositif de mesure selon l'invention sur un hélicoptère pourvu de servo-commandes du rotor;
- la figure 4 est un schéma du circuit constituant les moyens de calcul associés aux détecteurs de chaque chaîne de mesure.

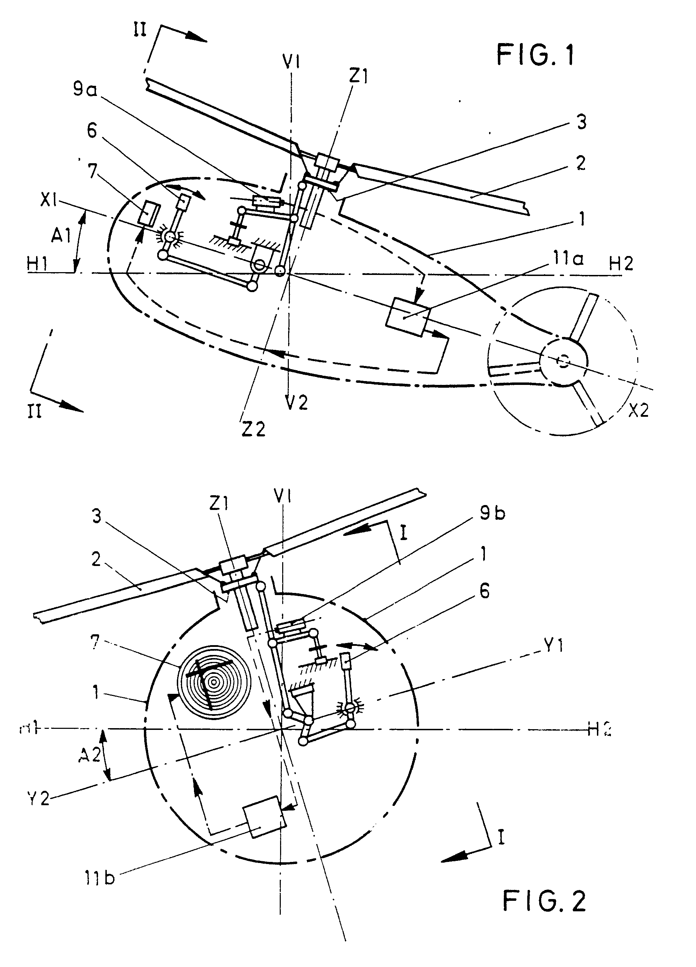

Dans le mode de réalisation schématisé sur les figures 1 - 4, l'hélicoptère équipé du dispositif de mesure de vitesse conforme à l'invention comporte un fuselage 1 auquel est lié un rotor 2. Le rotor 2 comporte un système de commande de variation cyclique de pas, essentiellement constitué d'un double plateau oscillant 3, dont la partie inférieure est montée à la cardan sur le fuselage 1 et soumise à l'action de deux bielles 4, 5, sensiblement parallèles à l'axe Z1 - Z2 du rotor 2. La bielle 4, dite bielle de commande longitudinale, est sensiblement située dans un plan passant par l'axe Z1 - Z2 du rotor et l'axe longitudinal X1 - X2 du fuselage 1. La bielle 5, dite bielle de commande transversale, est sensiblement située dans un plan perpendiculaire au précédent, et défini par l'axe Z1 - Z2 du rotor et l'axe transversal Y1 - Y2 du fuselage. Les deux bielles de commande 4, 5, sont manoeuvrées au moyen d'un manche de pilotage 6.

Le dispositif de mesure du genre prévu par l'invention comporte deux chaînes de mesure, sensiblement identiques, et correspondant respectivement à la composante de la vitesse de l'hélicoptère suivant l'axe longitudinal X1 - X2 et suivant l'axe transversal Y1 - Y2. A la différence d'autres aéronefs, l'hélicoptère peut en effet prende une vitesse orientée de manière quelconque dans le plan défini par les deux axes précités, le but de l'invention étant, comme on l'a vu, de permettre une mesure commode d'une telle vitesse.

Selon l'invention, chaque chaîne de mesure comprend un détecteur unique respectivement 9a pour la détection de la position de commande cyclique du pas du rotor suivant l'axe longitudinal et simultanément de la composante de l'accélération suivant le même axe et 9b pour la détection des paramètres correspondants selon l'axe transversal.

Conformément au mode de réalisation de l'invention, les détecteurs 9a et 9b sont constitués chacun par un accéléromètre disposés pour agir respectivement le premier selon un axe longitudinal horizontal et le second selon un axe transversal horizontal afin de détecter respectivement les composantes longitudinale et transversale de l'accélération.

Selon une variante, les accéléromètres de chaque chaîne de mesure pourront être calés pour agir selon des axes de mesure, différents des axes longitudinal et transversal pour compenser une éventuelle distorsion du flux du rotor ou des déphasages dans la réponse en battement des pales.

Selon une réalisation particulière de l'invention, ce détecteur unique pour chaque chaîne de mesure permet de par sa disposition de prendre en compte également la position de commande cyclique de pas du rotor selon l'axe considéré. Pour ce faire, les accéléromètres 9a et 9b sont disposés sur des plates-formes 100a et 100b articulées à une de leurs extrémités par rapport à la cellule de l'hélicoptère et liées par leur autre extrémité à la bielle de commande correspondante (resp. 4 et 5) par une articulation sans jeu de telle sorte que, lors des déplacements de chaque bielle de commande 4 ou 5, l'accéléromètre de la chaîne de mesure correspondante se déplace de part et d'autre d'un plan sensiblement horizontal par rotation autour d'un axe parallèle à l'un des axes principaux de l'hélicoptère.

Selon un mode pratique de réalisation, la plate-forme 100a est constituée d'un plateau 101a liée à la bielle de commande 4 par une articulation sans jeu telle qu'une rotule 103a et, par son extrémité libre, articulée par une biellette à longueur ajustable 102a qui peut être réalisée de façon classique au moyen d'une double tige filetée à pas inversés reliée par un écrou à pas inversés, ceci pour permettre un réglage de la position statique de la plate-forme 100a. Les mêmes dispositions sont prises au sujet du positionnement de l'accéléromètre 9b disposé sur une plate-forme 100b orientée perpendiculairement à la plate-forme 100a.

Selon une variante de réalisation, les plates-formes 100a et 100b seront calées de telle sorte que leurs déplacements s'effectuent autour d'un plan incliné par rapport à l'horizontale par exemple pour compenser des particularités de construction de l'hélicoptère telles qu'une inclinaison statique de la cellule par rapport à l'horizontale.

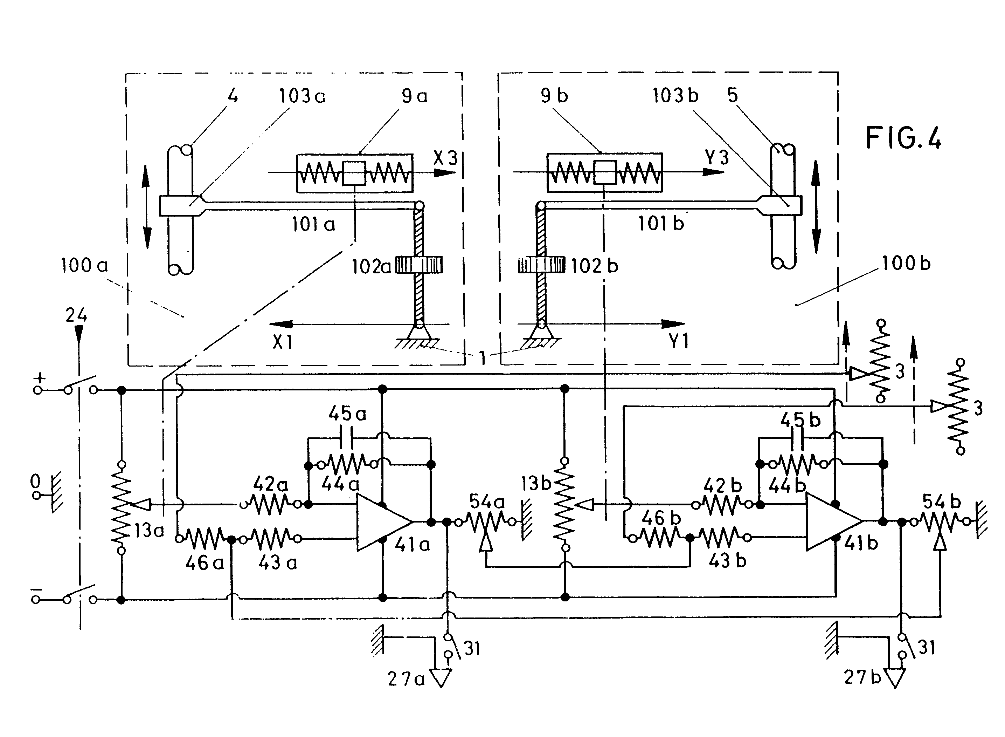

On a représenté sur la figure 4 le schéma d'une réalisation pratique des moyens de calcul associés à chaque chaîne de mesure.

La sortie de chaque accéléromètre 9a; 9b est reliée au curseur d'un potentiomètre 13a; 13b relié par une résistance 42a; 42b à l'entrée négative d'un aplificateur 41a; 41b opérationnel de façon à obtenir un signal amplifié en puissance par la résistance 42a; 42b et une résistance 44a; 44b disposée en contre-réaction, et filtré, la constante de temps du système étant fournie par le circuit R - C 44a - 45a; 44b, 45b.

La tension de sortie de chaque amplificateur opérationnel est appliquée à la ligne double 29 contrôlée par le commutateur 31 des circuits de commande 27a, 27b du pilote automatique 27.

Une fraction de la tension de sortie de la chaîne "longitudinale" 41a est appliquée au moyen d'un potentiomètre 54a et d'une résistance 43b à l'entrée positive de l'amplificateur 41b de la chaîne "transversale".

Il en est fait de même d'une fraction du signal de sortie de la chaîne "transversale" appliquée à l'entrée positive de la chaîne "longitudinale" au moyen du potentiomètre 54b et de la résistance 43a, ceci afin de contrôler et de réduire si nécessaire par l'ajustement des potentiomètres 54a, 54b, les interactions éventuelles entre les deux voies telles que les variations de la position de la commande 4 - 5 du rotor sous l'effet de la variation éventuelle de la composante de la vitesse mesurée par l'une ou l'autre chaîne.

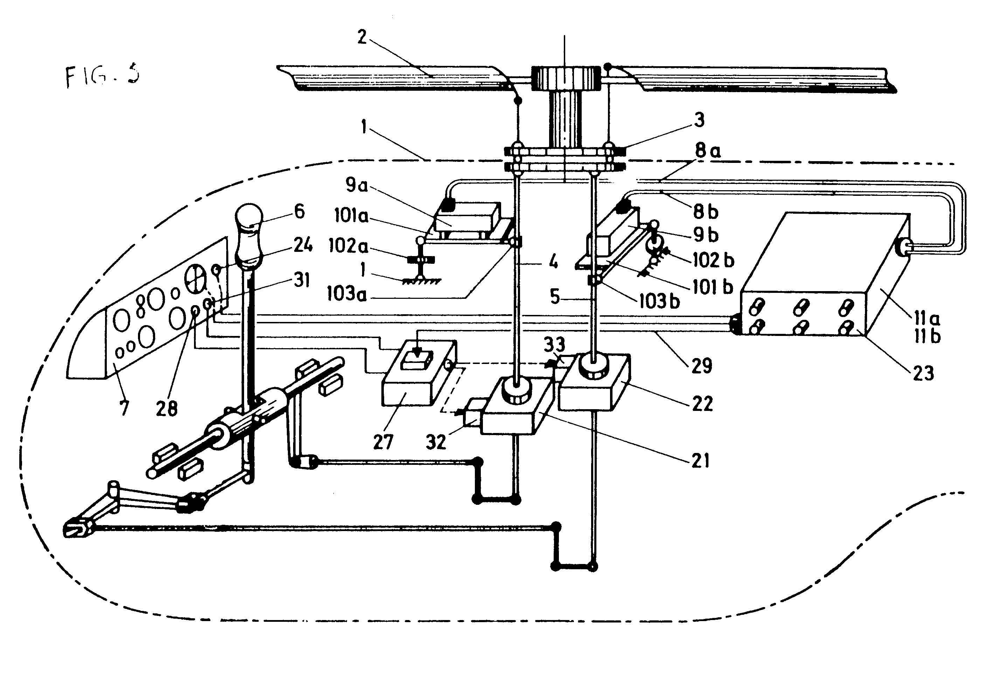

Des moyens de calcul 23 sont connectés à la sortie des accéléromètres 9a, 9b pour agir notamment d'une part sur un pilote automatique 27 (figure 3) et d'autre part éventuellement sur un indicateur double 7 qui peur comporter deux barres croisées mobiles chacune par rapport à une position médiane pour représenter les valeurs algébriques de chaque composante de la vitesse suivant les axes de référene X1 - X2, Y1 - Y2.

En référence aux figures 3 et 4, les accéléromètres 9a, 9b ont leur sortie électriquement reliée à la borne mobile d'un potentiomètre de mesure 13a, 13b dont le signal de sortie commande les moyens de calcul.

Le rotor 2 comporte des servo-commandes 21, 22, associées aux bielles 4, 5 (figure 3), sur lesquelles sont articulées les deux plates-formes 100a et 100b portant les accéléromètres 9a, 9b, entre le plateau oscillant 3 et les servo-commandes 21, 22. Les moyens de calcul de chaque chaîne sont contenus dans un boîtier commun 23, ainsi que d'autres circuits décrits ci-après. Un bouton de commande 24, disposé sur la planche de bord, permet au pilote de mettre en marche le dispositif de mesure.

L'hélicoptère tel que représenté sur les figures est équipé d'un pilote automatique 27, mis en marche au moyen d'un interrupteur d'alimentation 28. Pour commander le pilote automatique 27, les moyens de calcul peuvent élaborer des signaux d'ordres, par exemple sous forme de tensions électriques transmises au pilote automatique par une ligne particulière 29, contrôlée par un commutateur 31. D'une manière connue, le pilote automatique 27 agit sur les servo-commandes 21, 22, par exemple par l'intermédiaire d'électro-vannes 32, 33 (figure 3), associées à un circuit de fluide sous pression (non représenté).

Dans une variante de réalisation, les moyens de calcul 23 comprenant notamment les amplificateurs opérationnels 41a, 41b et leur électronique associée peuvent être intégrés dans un système de calcul numérique et/ou analogique unique qui réalise des fonctions variées telles que celles d'un pilote automatique, d'un calculateur de commandes de vol et/ou d'un calculateur de commandes de tir, et/ou d'un calculateur de navigation, ceci étant réalisé au moyen de circuits intégrés, les moyens de calcul étant aptes à recalculer les valeurs des positions cycliques du pas et des accélérations pour élaborer des signaux de commande permettant d'assurer en vol une fonction d'assistance au pilotage.

Le fonctionnement du dispositif ainsi décrit est explicité ci-après. Lorsque l'hélicoptère est en vol (figures 1 à 3) manoeuvré au moyen du manche de pilotage 6, les détecteurs 9a, 9b mesurent les composantes longitudinale et transversale de l'accélération suivant respectivement sensiblement l'axe longitudinal X1 - X2 et l'axe transversal Y1 - Y23, les composantes longitudinale et latérale ainsi mesurées étant affectées d'un coefficient tenant compte de la variation de la commande cyclique de pas dans le plan considéré car l'axe de mesure de chaque accéléromètre 9a, 9b se déplace proportionnellement à la variation de commande cyclique puisque les détecteurs 9a, 9b sont disposés sur des plateaux liés aux mouvements des bielles 4,5 de commande.

A position de commande cyclique fixe, le dispositif selon l'invention réagit comme un dispositif qui comporterait un capteur d'accélération et un capteur de position de commande cyclique séparé (par chaîne de mesure), à une accélération longitudinale ou latérale de l'hélicoptère.

Dès que la position cyclique varie, la variation immédiate de calage des plateaux 101a, 1101b cause une variation immédiate du calage des accéléromètres donc de la valeur de l'accélération mesurée consistant essentiellement en la pesanteur, en phase de vol uniforme. Cette variation est strictement egale à celle qu'aurait causé un détecteur de déplacement cyclique convenablement réglé selon les principes de réglage de commandes de vol d'un hélicoptère rappelés ci-après.

Les deux commandes cycliques longitudinale et latérale de la quasi-totalité des hélicoptères sont basées sur le même principe suivant

On considère l'hélicoptère au sol, rotor arrêté, et l'une des pales que l'on référence P1.

On repère la position angulare de P1 dans son mouvement de rotation autour de l'axe d'entraînement mécanique de tout le rotor (par le moteur), par l'angle $\varphi$ que fait l'axe longitudinal propre de la pale avec l'axe de référence X1 - X2 du fuselage.

Il existe sur tous les hélicoptères 4 positions particulières de chaque pale dites "positions canoniques" caractérisées par 4 valeurs bien précises de l'angle φ. Ces quatre valeurs sont les mêmes pour toutes les pales. Les 4 valeurs canoniques sont très voisines de 0, 90, 180 et 270 degrés. Elles sont réglées mécaniquement par le constructeur lorsqu'il établit les plans des commandes de vol. Ces valeurs sont indéréglables et repérées pour les opérations de maintenance.

On désigne respectivement par 1, 2, 3, 4 les quatre positions canoniques. Les positions 1 et 3 sont évidemment sur un même diamètre du rotor, sensiblement aligné avec l'axe X1 - X2 du fuselage.

Les positions 2 et 4 sont également sur un même diamètre du rotor, sensiblement aligné avec l'axe transversal Y1 - Y2 du fuselage.

Chaque pale est, en plus, articulée en rotation autour de son propre axe lonaitudinal. Cette liberté permet la commande du pas de chaque pale, au moyen de la cinématique classique par l'intermédiaire des plateaux cyliques fixes et mobiles 3 et 4 de la figure 4. Le plateau cyclique "fixe" 4 est lui même commandé en pivotement ( ± 20 degrés environ) autour de deux axes rextangulaires X1 - X2 et Y1 - Y2 par les deux commandes cycliques 21 et 22 décalés angulairement par rapport aux axes principaux de l'hélicoptère.

Le calage mécanique de l'ensemble est tel que: Si la pale P1 est en position canonique 1 ou 3, un mouvement avant-arrière pur du manche cyclique 6 ne provoquera aucune variation de pas sur P1; mais un mouvement gauche-droite du manche 6 provoquera une variation maximale de pas sur P1. Si la pale P1 est en position canonique 2 ou 4, un mouvement avant-arrière pur du manche 6 provoque une variation de pas maximale sur P1; mais un mouvement gauche-droite du manche 6 ne provoque aucune variation de pas. Le sens de la variation de pas imposée est inverse pour deux positions canoniques différant de 180 degrés.

La valeur moyenne du pas par rapport à laquelle s'effectue la variation cyclique est déterminée par la position des plateaux cycliques le long de l'axe du rotor Z1 - Z2. Cette position est commandée par le levier de "Pas général" à la position du pilote.

Pour régler la sensibilité du dispositif selon l'invention, une méthode préférée est la suivante:

L'hélicoptère étant au sol, on place la pale P1 en position canonique 1, donc sensiblement sur l'avant.

On fait débattre le manche cyclique 6 de l'extrême gauche à l'extrême droite après avoir monté sur la pale un instrument de mesure de rotation du pas de P1. Pour un rotor tournant dans le sens des aiguilles d'une montre, on va constater que la valeur du pas de P1, soit GP1, varie négativement (on dit "à piquer") lorsque le manche 6 va vers la droite.

Soit DGP1 la variation totale de GP1 dans cet essai.

En l'absence du dispositif selon l'invention, on caractérise généralement la sensibilité cyclique longitudinale comme le rapport DGP1/100, exprimé en degrés par %.

En pratique, on relève la courbe GP1 = f (VLA1) où VLA1 représente une tension électrique représentative de la position cyclique latérale et l'on s'attache à en assurer la meilleure linéarité possible soit par une étude mécanique soignée des cinématiques soit par des corrections électroniques des non linéarités.

On obtient alors la mesure de la sensibilité cyclique latérale par le rapport DBP1/DVLA1 = STLA.

De la même façon, on mesure la sensibilité cyclique longitudinale STLO en plaçant P1 en position canonique 2 ou 4 et en faisant débattre le manche 6 de l'extrême arrière à l'extrême avant. La mesure DGP2 de la variation totale du pas de P1 rapportée à la mesure DVLO1 de la variation de commande cyclique longitudinale exprimera la sensibilité cyclique longitudinale DGP2/DVLO1 = STLO.

Pour régler le dispositif selon l'invention, si l'on se met dans la configuration de réglage au sol définie ci-dessus, avec un hélicoptère répondant à l'installation de la figure 4, on constatera que:

Si l'on déplace le manche cyclique 6 d'extrême avant à extrême arrière, le support mécanique 100a accusera une variation totale d'inclinaison longitudinale égale à DISLO. Cette valeur dépend uniquement des bras de levier utilisés dans la construction.

On peut en particulier régler ces bras de levier de telle façon que DISLO soit exactement égal à la valeur DGP1 vu plus haut.

Pour effectuer le réglage de la vitesse air nulle, le seul procédé fiable sur un hélicoptère nouveau consiste, une fois l'installation en état de marche et parfaitement réglée comme décrit plus haut, à effectuer un vol stationnaire dans un air calme à vitesse faible et constante.

Par une mesure des vitesses indiquées des deux composantes de la vitesse air, effectuée avec l'hélicoptère en vol stationnaire par rapport au sol hors effet de sol, une simple procédure avec 4 caps de vol espacés de 90 degrés permet un très bon affinage de ce réglage.

Un dispositif tel que décrit dans la présente demande permet donc de mesurer de façon précise et avec un simple réglage initial au montage les composantes latérale et longitudinale d'un hélicoptère au voisinage du vol stationnaire et d'agir éventuellement sur les servo-commandes de variation de pas du rotor afin d'assurer une correction du pilote automatique, ou sur les autres systèmes de navigation ou de commande de tir.

Afin de compenser notamment les variations de puissance de l'hélicoptère jouant sur l'équilibre longitudinal et transversal de celui-ci, le dispositif est équipé sur chaque chaîne de mesure de vitesse latérale ou longitudinale d'un potentiomètre 3 relié par son curseur à l'entrée positive de l'amplificateur 41a, 41b au travers d'une résistance 46a, 46b pour introduire dans la chaîne de mesure un paramètre correctif tel que la valeur de pas général du rotor, qui est représentative des variations de puissance.

Dans une variante de réalisation, au lieu d'utiliser des accéléromètres calés suivant les axes principaux de l'hélicoptère, il peut être prévu d'actionner les plates-formes 100a et 100b par un moyen mécanique dont le mouvement est la résultante de la combinaison des mouvements des bielles de commande longitudinale 4 et transversale 5 pour tenir compte d'un déphasage éventuel dans la réponse en battement des pales.

La simplicité des techniques mises en oeuvre et l'intégration du dispositif dans un calculateur global permettent l'utilisation du dispositif dans tous l'hélicoptère de série tant pour assurer les essais initiaux dans un centre d'essai que pour assurer une assistance au pilotage en utilisation quotidienne.

## Revendications

1. Dispositif pour mesurer, notamment au voisinage du régime de vol stationnaire, la vitesse par rapport à l'air d'un hélicoptère comportant au moins un rotor (2) de sustentation en rotation autor d'un axe Z1 - Z2 et un système de commande cyclique du pas du rotor (2) manoeuvré au moyen d'un manche (6) de pilotage, le dispositif comportant deux chaînes de mesure sensiblement identiques associées à un indicateur (7) double et correspondant respectivement au déplacement de l'hélicoptère suivant son axe longitudinal X1 - Z2 et suivant son axe transversal et $Y_1$ - $Y_2$ comportant des moyens de calcul caractérisé en ce que chaque chaîne de mesure comprend un détecteur unique (respectivement 9a, 9b) de la position de commande cyclique du pas du rotor suivant l'axe considéré et de la composante de l'accélération suivant le même axe et en ce que les moyens de calcul (23, 27) assurent l'intégration du signal de sortie du détecteur unique de chaque chaîne de mesure pour fournir les composantes de la vitesse par rapport à l'air de l'hélicoptère dans le système d'axes précités.

2. Dispositif selon la revendication 1, caractérisé en ce que, pour l'utilisation pour un hélicoptère dont le rotor (2) comporte un système de commande de variation cyclique de pas (3) commandé par au moins une bielle de commande longitudinale (4) sensiblement située dans un plan passant par l'axe Z1 - Z2 du rotor et l'axe longitudinal X1 - X2 du fuselage et une bielle (5) de commande transversale sensiblement située dans un plan perpendiculaire au précédent et défini par l'axe Z1 - Z2 du rotor et l'axe transversal Y1 - Y2 du fuselage, les deux bielles (4 et 5) étant sensiblement parallèles à l'axe Z1 - Z2 du rotor (2), le détecteur unique de la position de commande cyclique du pas du rotor suivant l'axe considéré et de la composante de l'accélération suivant le même axe est constitué pour chaque chaîne par un accéléromètre (9a; 9b) disposé respectivement pour agir dans le plan vertical longitudinal passant par les axes X1 - X2 et Y1 - Y2 pour la chaîne de mesure de la composante longitudinale et (9b) dans le plan vertical transversal passant par les axes Y1 - Y2 et Z1 - Z2, pour la chaîne de mesure de la composante transversale, chaque accéléromètre étant disposé sur une plate-forme (respectivement 100a, 100B) liée au déplacement vertical de la bielle (respectivement 4, 5) considérée, le signal de sortie de chaque accéléromètre étant transmis aux moyens de calcul (23) par l'intermédiaire de liaison par fils (8a, 8b).

3. Dispositif selon la revendication 2, caractérisé en ce que les plates-formes (respectivement 100a, 100b) sont calées de telle sorte que leurs mouvements s'effectuent de part et d'autre de plans sensiblement parallèles à un plan vertical longitudinal passant par les axes X1 - X2 et Z1 - Z2 par rotation autour d'un axe parallèle à l'un des axes longitudinal et transversal respectivement Y1 - Y2, X1 - X2 de l'hélicoptère.

4. Dispositif selon la revendication 2, caractérisé en ce que les plates-formes (respectivement 100a, 100b) sont calées de telle sorte que leurs mouvements s'effectuent de part et d'autre d'un plan incliné par rapport au plan de référence hélicoptère passant par les axes X1 - X2 et Z1 - Z2 par rotation autour d'un axe parallèle à l'un des axes longitudinal et transversal respectivement Y1 - Y2, X1 - X2 de l'hélicoptère, pour compenser la distorsion du flux du rotor.

5. Dispositif selon l'une quelconque des revendications 2 à 4 caractérisé en ce que les plates-formes (100a, 100b) sont constituées d'un plateau (101a, 101b) dont une extrémité est liée à la bielle de commande de pas cyclique correspondante (4, 5), au moyen d'une articulation sans jeu (103a, 103b) et dont l'autre extrémité repose sur la cellule (1) de l'hélicoptère au moyen d'une biellette (102a, 102b) de longueur ajustable.

6. Dispositif selon la revendication 5, caractérisé en ce que la biellette ajustable (102a, 102b) est constituée par une double tige filetée à pas inversés commandés par un double écrou freinable à pas inversés.

7. Dispositif selon l'une quelconque des revendications 1 à 6 caractérisé en ce que chacun des détecteurs uniques 9a, 9b) constituant le détecteur unique commande le déplacement de la borne mobile d'un potentiomètre (13a, 13b) et en ce que les moyens de calcul comprennent pour chaque chaîne de mesure notamment un amplificateur opérationnel (41a, 41b) dont l'entrée négative est reliée à la borne mobile du potentiomètre (13a, 13b) par l'intermédiaire d'une résistance (42a, 42b), l'entrée positive de l'amplificateur opérationnel de chaque chaîne (respectivement 41a, 41b) étant reliée à la borne mobile d'un potentiomètre (respectivement 54b et 54a) dont une extrémité est à la masse et l'autre extrémité reliée à la sortie de l'amplificateur opérationnel de l'autre chaîne de mesure (respectivement 41b, 41a).

8. Dispositif selon la revendication 7, caractérisé en ce que les moyens de calcul comprennent en combinaison avec les amplificateurs 41a et 41b un pilote automatique (27) qui reçoit en entrée les signaux de sortie des amplificateurs (41a, 41b).

9. Dispositif selon l'une quelconque des revendications 6 ou 7 caractérisé en ce qu'il comprend sur chaque chaîne de mesure de vitesse longitudinale ou latérale un potentiomètre (3) relié par sa borne mobile à l'entrée positive de l'amplificateur (41b) pour introduire dans la chaîne de mesure un paramètre correctif tel que la valeur du pas général du rotor.

10. Dispositif d' aide au pilotage d'un hélicoptère pourvu d'un dispositif selon l'une quelconque des revendications 1 à 9, dans lequel les moyens de calcul (23, 41a, 41b) sont intégrés dans un système de calcul numérique et/ou analogique unique comprenant par exemple un pilote automatique, ou un calculateur de tir, un calculateur de navigation, un calculateur de commandes de vol, et en ce que les moyens de calcul sont aptes à recalculer les valeurs des positions cycliques de pas et des accélérations pour élaborer des signaux de commande formant assistance au pilotage.

**Patentansprüche**

1. Vorrichtung zur Messung, insbesondere im Bereich des Schwebefluges, der Eigengeschwindigkeit gegenüber der Luft eines Hubschraubers mit mindestens einem um die Achse Z1 - Z2 drehenden Hauptrotor (2) sowie einem System zur periodischen Steigungssteuerung (3) des Rotors (2) über einen Steuerknüpel (6), wobei diese Vorrichtung aus zwei beinahe identischen Meßketten, die an einer doppelten Anzeigevorrichtung gekoppelt sind und die Bewegung des Hubschraubers nach dessen Längachse X1 - X2 bzw. Querachse Y1 - Y2 angeben, sowie aus entsprechenden Rechenmitteln besteht, dadurch gekennzeichnet, daß jede Meßkette mit einem einzigen Meßwertgeber (9a bzw. 9b) versehen ist, der die Lage der Taumelscheibe um die entsprechende Bezugsachse sowie die Komponente der Beschleunigung in Richtung der selben Achse angibt, und daß die Rechenmittel (23, 27) die Integration des von jedem einzigen Meßwertgeber jeder Meßkette ermittelten Ausgangssignals vornimmt, um die Komponenten der Eigengeschwindigkeit gegenüber der Luft des Hubschraubers im vorgenannten Achsensystem anzugeben.

2. Vorrichtung nach Anspruch 1, dadurch gekennzeichnet, daß für eine Anwendung auf einem Hubschrauber, dessen Hauptrotor (2) mit einem System zur periodischen Steigungssteuerung (3) versehen ist, mit mindestens einer Steuerstange der Längsrichtung (4), die sich ziemlich genau in der aus der Achse Z1 - Z2 und der Längsachse X1 - X2 des Hubschrauberrumpfes entstehenden Ebene befindet, und einer Steuerstange der Querrichtung (5), die sich ziemlich genau in der aus der Achse Z1 - Z2 und der Querachse Y1 - Y2 des Hubschrauberrumpfes entstehenden Ebene befindet, wobei diese beiden Steuerstangen (4, 5) ziemlich genau parallel zur Achse Z1 - Z2 des Hauptrotors angeordnet sind, der einzige Meßwertgeber zur Angabe der Lage der Taumelscheibe um die entsprechende Achse sowie des Wertes der Beschleunigungskomponente in Richtung derselben Achse für jede Meßkette aus einem Beschleunigungsmesser (9a, 9b) besteht, der entsprechend für eine Betätigung in der aus der Achsen X1 - X2 und Z1 - Z2 entstehenden, senkrechten Längsebene für die Meßkette der Längskomponente bzw. in der aus der Achsen Y1 - Y2 und Z1 - Z2 entstehenden, senkrechten Querebene für die Meßkette der Querkomponente angeordnet ist, wobei jeder Beschleunigungsmesser auf einer Plattform (100a bzw. 100b) eingebaut ist, deren Ausrichtung mit der senkrechten Bewegung der entsprechenden Steuerstange (4 bzw. 5) gekoppelt wird, und wobei das Ausgangssignal eines jeden Beschleunigungsmessers den Rechenmitteln (23) über eine Kabelverbindung (8a, 8b) übermittelt wird.

3. Vorrichtung nach Anspruch 2, dadurch gekennzeichnet, daß die Plattformen (100a bzw 100b) in solcher Weise angeordnet sind, daß ihre Bewegungen beiderseits von Ebenen erfolgen, die ziemlich genau parallel zu einer senkrechten, aus den Achsen X1 - X2 und Z1 - Z2 entstehenden Längsebene, und zwar um eine Achse, die parallel zur Quer- Y1 - Y2 bzw. Längsachse X1 - X2 des Hubschraubers verläuft.

4. Vorrichtung nach Anspruch 2, dadurch gekennzeichnet, daß die Plattformen (100a bzw. 100b) in solcher Weise angeordnet sind, daß ihre Bewegungen beiderseits einer gegenüber der aus den Achsen X1 - X2 und Z1 - Z2 entstehenden Bezugsebene des Hubschraubers schiefen Ebene erfolgen, und zwar um eine Achse, die parallel zur Quer- Y1 - Y2 bzw. Längsachse X1 - X2 des Hubschraubers verläuft, um die Verdrehung des Rotorflußes auszugleichen.

5. Vorrichtung nach einem beliebigen Anspruch 2 bis 4, dadurch gekennzeichnet, daß die beiden Plattformen (100a, 100b) aus einer Platte (101a, 101b) bestehen, die auf einer Seite mit der entsprechenden Steuerstange (4, 5) der periodischen Steigungssteuerung über ein spielfreies Gelenk (103a, 103b) und auf der anderen Seite mit der Zelle (1) des Hubschraubers über eine in der Länge einstellbare Pendelstütze (102a, 102b) verbunden ist.

6. Vorrichtung nach Anspruch 5, dadurch gekennzeichnet, daß die einstellbare Pendelstütze (102a, 102b) aus einer doppelten Spindel mit gegenseitigem Gewinden besteht, deren Länge über eine doppelte, sichernbare Mutter mit gegenseitigen Gewinden eingestellt wird.

7. Vorrichtung nach einem beliebigen Anspruch 1 bis 6, dadurch gekennzeichnet, daß jeder einzelne Meßwertgeber die Bewegung des Schleifers eines Potentiometers (13a, 13b) steuert und daß die Rechenmittel jeder einzelnen Meßkette insbesondere aus einem Operationsverstärker (41a, 41b) besteht, dessen negativen Eingang mit dem Schleifer des Potentiometers (13a, 13b) über einen Widerstand (42a, 42b) verbunden ist, wobei der positive Eingang des Operationsverstärkers jeder Meßkette (41a bzw. 41b) mit dem Schleifer eines Potentiometers (54b bzw. 54a) verbunden ist, von dem ein Ende mit der elektrischen Masse und das andere Ende mit dem Ausgang des Operationsverstärkers (41b bzw. 41a) der anderen Meßkette verbunden ist.

8. Vorrichtung nach Anspruch 7, dadurch gekennzeichnet, daß die Rechenmittel in Kombination mit den Operationsverstärkern 41a und 41b einen Steuerregler (27) einbeziehen, der an dessen Eingang die Ausgangssignale der Verstärker (41a, 41b) empfängt.

9. Vorrichtung nach einem beliebigen Anspruch 6 oder 7, dadurch gekennzeichnet, daß sie in jeder Meßkette der Längs- bzw. Quergeschwindigkeit mit einem Potentiometer (3) versehen ist, dessen Schleifer am positiven Eingang des Verstärkers (41b) angeschlossen ist, um der Meßkette einen Korrekturparameter wie z. B. den Wert der gemeinsamen Steigungseinstellung des Rotors einzugeben.

10. Vorrichtung zur Hilfe der Steuerung eines Hubschraubers bestehend aus einer Vorrichtung nach einem beliebigen Anspruch 1 bis 9, bei welchem die Rechenmittel (23, 41a, 41b) einem aus einem Steuerregler, einem Navigationsrechner, einem Flugsteuerungsrechner oder einem Feuerleitrechner bestehenden, einzigen digitalen und/oder analogen Rechensystem integriert sind, wobei die eingesetzten Rechenmittel in der Lage sind, die Werte der zyklischen Steigungslagen sowie der Beschleunigungen zur Ermittlung von Steuersignalen für die Unterstützung der Flugsteuerung neuzuberechnen.

## Claims

1. A device for measuring, particularly near hovering flight speeds, the air speed of a helicopter, comprising at least one lifting rotor (2) and a cyclic rotor pitch control system operated by means of a control stick (6), two substantially identical measuring devices connected to a dual indicator (7) and responsing, respectively, to the displacement of the helicopter along its longitudinal axis X1 - X2 and along its transaxis Y1 - Y2, and computing means, characterized by the fact that each measuring device includes a single detector (respectively 9a, 9b) for detecting the cyclic rotor pitch control position along the axis concerned, and for detecting the acceleration component along the same axis, and in that the computing means (23, 27) provide the integration of the output signal of the single sensor of each measuring device in order to provide the airspeed components of the helicopter in the said axes system.

2. A device in accordance with claim 1, characterized by the fact in that for a helicopter in which the rotor (2) comprises a cyclic pitch variation control system (3) controlled by firstly at least one longitudinal control rod (4) situated substantially in a first plane passing through the axis Z1 - Z2 of the rotor, and the longitudinal axis X1 - X2 of the longitudinal dimension of the fuselage of the helicopter and secondly one transverse control rod (5) situated substantially in a plane perpendicular to the first plane and defined by the axis Z1 - Z2 of the rotor, and the transverse axis Y1 - Y2 of the fuselage, both rods (4, 5) being substantially parallel to the axis Z1 - Z2 of the rotor, each detector of the cyclic rotor pitch control position along the respective axis and of the acceleration component along the same axis comprises an accelerometer (9a, 9b) positionned respectively to operate in the vertical longitudinal plane delimited by the axis X1 - X2, Z1 - Z2 for the measuring device of the longitudinal component, and in the vertical transverse plane Y - Y2, Z1 - Z2 for the measuring device of the transverse component, each accelerometer being positionned on a platform (100a, 100b) connected to the respective vertical displacement of the rod concerned (4, 5), the outout signal of each accelerometer being transmitted to the computing means by means of a wire linkage (8a, 8b).

3. A device in accordance with claim 2, characterized in that the platforms (100a, 100b) are positionned in such a way that their movements occur on both sides of planes approximately parallel to the plane delimited by the axis X1 - X2, Z1 - Z2 by rotation around an axis parallel to one of the X1 - X2 longitudinal and Y1 - Y2 transversal axes of the helicopter.

4. A device in accordance with accordance with claim 2, characterized by the fact that the platforms (100a, 100b) are positionned in such a way that their movements occur on both sides of a plane inclined in relation to the reference plane delimited by the axis X1 - X2, Z1 - Z2 by rotation around an axis parallel to one of the X1 - X2 longitudinal and Y1 - Y2 transversal axes of the helicopter to compensate for the distortion in rotor flow.

5. A device in accordance with claims 2 to 4, characterized by the fact that the platforms (100a, 100b) are made of plate (109a, 109b) of which one extremity is linked to a corresponding cyclic control rod (4, 5) by means of a hinge (103a, 103b), and of which the other extremity is connected to the airframe (1) of the helicopter by means of a rod (102a, 102b) of adjustable length.

6. A device in accordance with claim 5, characterized by the fact that the ajustable rod (102a, 102b) comprises a double reverse-threaded shaft controlled by a double reverse threaded braking nut.

7. A device in accordance with one of claim 6, characterized by the fact that the accelerometer (9a, 9b) constituting the single detector controls the displacement of the mobile terminal of a potentiometer (13a, 13b) and in that the computing means includes for each measuring device, respectively, an operational amplifier (41a, 41b) of which the negative input is connected to the mobile terminal of the potentiometer (13a, 13b) by means of a resistance (42a, 42b), the positive input of the operational amplifier (41a, 41b) being connected to the mobile terminal o a potentiometer of which one extremity is grounded ans the other extremity is connected to the output of the operational amplifier of the other measuring device (41a, 41b).

8. A device in accordance with claim 7, characterized by the fact that the computing means include in combination with amplifiers (41a, 41b) an automatic pilot (27) that receives as an input the output signals of the amplifiers (41a, 41b).

9. A device in accordance with claim 6 or 7, characterized by the fact that each chain of measuring device for longitudinal or lateral speed comprises a potentiometer (3) connected by its mobile terminal to the positive input of the amplifier (41b) in order to introduce into the measuring device a corrective parameter such as the value of the general pitch of the rotor.

10. A device to help stiring of a helicopter equipped with the device of one of claim 1 to 9, characterized by the fact that the computing means (23, 41a, 41b) are integrated into a single computer system comprising an automatic pilot, or for instance a computer for firing, or a computer for navigation, or computerised flight control and in that the computing means are able to recaculate the cyclic pitch position and acceleration values in order to form control signals which will assist pilotage.

FIG.1

FIG.2

FIG. 5

EP 0 171 306 B1

FIG.4